# EUROPÄISCHE PATENTSCHRIFT

(11) **EP 3 924 651 B1**
(45) Veröffentlichungstag und Bekanntmachung des Hinweises auf die Patenterteilung: **20.03.2024**
(21) Anmeldenummer: 19706450.4
(22) Anmeldetag: 14.02.2019
(51) Int. Cl.: F16K 11/074, F16K 11/22, F16K 11/24

(54) **FUNKTIONSEINHEIT**
FUNCTIONAL UNIT
UNITÉ FONCTIONNELLE

(43) Veröffentlichungstag der Anmeldung: 22.12.2021
(73) Patentinhaber: Viega Technology GmbH & Co. KG, 57439 Attendorn (DE)
(72) Erfinder: KNUPFER, Daniel, 7203 Trimmis (CH); OBRIST, Roland, 7412 Scharans (CH)
(74) Vertreter: Troesch Scheidegger Werner AG
(86) Internationale Anmeldenummer: PCT/EP2019/053626
(87) Internationale Veröffentlichungsnummer: WO 2020/164706

(56) Entgegenhaltungen:
- EP-A1- 2 604 896
- EP-A2- 0 195 271
- US-A1- 2010 044 610

## Beschreibung

Die vorliegende Erfindung betrifft eine Funktionseinheit auf dem Gebiet der sanitären Einrichtungen. Unter einer Funktionseinheit wird in der Sanitärtechnik eine Einheit verstanden, welche auch als zentraler Operationsteil einer Sanitärarmatur umschrieben werden kann. Dabei umfassen solche Funktionseinheiten in der Regel Ventile, insbesondere Mischventile bei Wasserarmaturen, um beispielsweise Wasser von einem Kaltwasser-Anschluss und von einem Warmwasser-Anschluss in einem bestimmten Verhältnis zu mischen, und das Mischwasser mit einer gewünschten Mischtemperatur an mindestens eine Verbrauchstelle abzugeben.

Funktionseinheiten können von Hand mit einem Hebel (Einhebelmischer), oder geregelt durch einen Thermostat, oder über ein elektronisches Bedienelement durch motorische Stellantriebe betätigt werden. Letzteres kann auch von einem Steuergerät aus erfolgen. Funktionseinheiten können mehrere Elemente umfassen, von denen nicht alle in einem oder demselben Gehäuse untergebracht sein müssen. Als Funktionseinheit kann sowohl eine Mischarmatur für sich als auch ein Verbund aus Mischer und Verteiler bezeichnet werden. Unter einem Verteiler wird dabei eine an den Mischer anschliessende Abgabestelle mit mindestens einem Austritt verstanden. Ein Verbund aus Mischer und Verteiler stellt eine Funktionseinheit im allgemeinen Sinne der vorliegenden Erfindung dar.

In der Patentschrift DE 101 19 690 C1 ist das Grundprinzip einer Sanitärinstallation in einem Bad beschrieben. Zentraler Teil dieser Sanitärinstallation ist eine Mischarmatur mit zwei Ventilen für den Einlass von Kaltwasser und Warmwasser, ein Mischwasserkanal mit Temperaturfühler und Durchflussmesseinrichtung, sowie ein Verteiler mit elektromagnetischen Absperrventilen zu den Mischwasser-Auslässen. Diese Einrichtung wird von einer elektronischen Steuerung angesteuert.

Dasselbe Grundprinzip für die sanitäre Versorgung in einem Badezimmer mit entsprechender Funktionseinheit ist auch in der Patentanmeldung FR 2 340 424 A1 in den Abbildungen dargestellt.

Die EP 0 195 271 A2 beschreibt eine Wasserinstallation für Waschräume mit mehreren Wascheinrichtungen. Hier sind in einem zentralen Steuerkasten in einer Box die elektronische Steuerung und in einem Raumabteil die elektro-hydraulischen Elemente untergebracht. An der Wand bzw. am Boden dieses Raumabteils sind die Rohranschlüsse angeordnet, nämlich ein Kaltwassereinlass und ein Heisswassereinlass, sowie die Auslässe für das Mischwasser zu den einzelnen Verbrauchstellen, z.B. mehreren Waschtrögen und Duschen. Die elektro-hydraulischen Elemente im genannten Raumabteil umfassen ein über einen Riemenantrieb motorisch gesteuertes Mischventil, einen Temperaturfühler im Mischwasserrohr, sowie einen Mischwasser-Verteiler mit Rohrverzweigung und separaten Elektromagnetventilen zu jedem einzelnen Auslass mit jeweils verbundener Verbrauchstelle.

In der EP 1 240 564 B1 wird ein elektronischer Mischwasserbereiter und ein Verfahren zur Mischwasserbereitung beschrieben. Dieser Mischwasserbereiter umfasst einen Mischkörper, der einen Warmwasser- und einen Kaltwasserzulauf aufweist. Das zugeführte Warm- und Kaltwasser wird innerhalb des Mischkörpers in Abhängigkeit von einem Temperatursensor in einem von einer elektronischen Reglereinheit vorgegebenen Verhältnis gemischt, um eine von einer Bedieneinheit vorgegebene Solltemperatur zu erreichen. Ein oder mehrere Wasserbezugsgeräte sind an den elektronischen Mischwasserbereiter anschliessbar und einzeln ansteuerbar, wobei keine Details zur Verteilung offenbart sind. Zum Antrieb des Mischkörpers wird gesagt, dass ein Schrittmotor als Stellglied über ein Getriebe auf einen drehbar gelagerten Stellkörper, gemäss Zeichnung verkörpert durch eine ins Innere der Mischkammer führende Spindel, einwirkt. Die elektronische Reglereinheit und das Stellglied mit Mischkörper sind in einer einzigen, zur Unterputzmontage geeigneten Geräteeinheit angeordnet.

EP 1 844 380 B1 beschreibt eine Waschanlage für einen Waschraum umfassend ein Mischventil mit elektronischer Steuerung und einen Elektromotor zum Einstellen des Mischverhältnisses von heissem und kaltem Wasser im Mischventil. In den Mischventilkörper führen ein Kaltwasser- und ein Heisswasser-Anschluss. Am Auslass des Mischventils und nach einer Dämpfungskammer wird die Temperatur des Mischwassers gemessen. Das Verhältnis zwischen der Kaltwasser- und der Heisswassermenge zur Erreichung einer gewünschten Mischwassertemperatur wird auf geregelte Weise eingestellt, indem die elektronische Steuerung über einen Elektro-Schrittmotor und einen Zahnriemenantrieb eine axial in der Mischkammer angeordneten Ventilkolbenstange mit Gewindeführung dreht und damit in ihrer axialen Position so verschiebt, dass die Grösse von genuteten Öffnungen von der Kaltwasserkammer zur nachfolgenden Heisswasserkammer verändert wird. Nach dem Auslass des Mischventils und der Dämpfungskammer kann das Mischwasser zum Beispiel auf eine, zwei oder mehr Verbrauchstellen verteilt werden, wobei jede Verbrauchstelle einzeln durch Elektromagnetventile angewählt wird. Das Mischventil mit Antrieb, die elektronische Steuerung, die Dämpfungskammer und die Magnetventile können in einer Box untergebracht sein. Aus der EP 2 604 896 A1 ist eine Funktionseinheit gemäß dem Oberbegriff von Anspruch 1 bekannt.

Im Stand der Technik ist die Tendenz ersichtlich, dass die Funktionseinheiten, unter denen wie eingangs gesagt ein Verbund aus Mischer und Verteiler verstanden werden soll, platzsparend und wenn möglich in einem Gehäuse untergebracht werden sollen. Die bisher bekannten Funktionseinheiten brauchen aber aufgrund der Bauweise und Anordnung ihrer Elemente immer noch relativ viel Bauraum und sind noch nicht optimal kompakt.

Aufgabe der vorliegenden Erfindung ist es, eine alternative Funktionseinheit zur Verfügung zu stellen, die kompakt und platzsparend ist und sich dadurch gut für die Unterputzmontage eignet.

Diese Aufgabe wird durch eine Funktionseinheit mit den Merkmalen des Anspruchs 1 gelöst.

Die Erfindung umfasst zudem Verwendungen der erfindungsgemässen Funktionseinheit.

Bevorzugte erfindungsgemässe Ausführungsformen und Varianten ergeben sich aus den jeweils abhängigen Ansprüchen.

Eine erfindungsgemässe Funktionseinheit für Sanitäreinrichtungen mit einem Kaltwasser-Zufluss und einem Warmwasser-Zufluss und mindestens einem Mischwasser-Auslass umfasst einen Mischer und einen mit dem Mischer über einen Verbindungskanal verbundenen Verteiler sowie eine elektronische Steuerung und daran angeschlossene Sensoren und elektromotorische Stellantriebe, wobei der Mischer und der Verteiler als Kartuschen mit elektromotorischen Stellantrieben ausgebildet sind und die Kartuschen als axial durchströmbare Ventile mit axialen und/oder radialen Ein-und Austritten konstruiert sind, welche im Inneren radial angeordnete und aufeinander liegende Scheiben mit je mindestens einer Durchlassöffnung aufweisen, von denen jeweils eine Scheibe auf einer Statorscheibe drehbar ist, wobei die drehbare Scheibe mit einer im jeweiligen Ventil axial angeordneten, in ihrem Hohlraum durchströmbaren und axial drehbaren Hülse im Eingriff steht, und diese Hülse an ihrem äusseren Umfang mit dem jeweiligen elektromotorischen Stellantrieb wirkverbunden ist.

Das erfinderische Bauprinzip solch kompakter Kartuschen mit motorischem Antrieb über den äusseren Umfang einer axial im Ventil angeordneten, in ihrem Hohlraum durchströmbaren und axial drehbaren Hülse ist für ein Axial-Stromregelventil in der noch nicht veröffentlichten PCT-Anmeldung desselben Anmelders mit dem Aktenzeichen PCT/EP2018/075352 noch näher beschrieben, und diese wird hiermit auch zum Offenbarungsgehalt der vorliegenden Anmeldung erklärt.

In einer Ausführungsform der erfindungsgemässen Funktionseinheit sind bei beiden Kartuschen sowohl der Eintritt als auch der Austritt axial angeordnet.

In einer anderen Ausführungsform der erfindungsgemässen Funktionseinheit sind bei der Mischer-Kartusche der Eintritt axial und der Austritt radial, und bei der Verteiler-Kartusche der Eintritt radial und der Austritt axial angeordnet.

Der Ort des Austritts aus der Mischer-Kartusche und des Eintritts in die Verteiler-Kartusche kann einen Einfluss auf die Geometrie des Verbindungskanals haben.

Bevorzugt weisen bei der erfindungsgemässen Funktionseinheit die axial drehbaren Hülsen an ihrem äusseren Umfang eine Verzahnung auf.

Bevorzugt verfügen die elektromotorischen Stellantriebe der erfindungsgemässen Funktionseinheit über ein Getriebe und ein als Zahnrad ausgebildetes Antriebsrad.

In einer Ausführungsform ist bei der erfindungsgemässen Funktionseinheit das als Zahnrad ausgebildete Antriebsrad mittels eines Zahnriemens mit der Verzahnung am äusseren Umfang der jeweiligen axial drehbaren Hülse wirkverbunden.

In einer anderen, bevorzugten Ausführungsform greift das als Zahnrad ausgebildete Antriebsrad in die Verzahnung am äusseren Umfang der jeweiligen axial drehbaren Hülse ein, und die jeweilige Hülse ist so mit dem jeweiligen elektromotorischen Stellantrieb wirkverbunden.

Bei der erfindungsgemässen Funktionseinheit sind die elektromotorischen Stellantriebe bevorzugt Schrittmotoren oder Gleichstrommotoren.

Bei der erfindungsgemässen Funktionseinheit ist im Verbindungskanal zwischen dem Mischer und dem Verteiler, und/oder beim Austritt des Mischers, und/oder beim Eintritt des Verteilers, bevorzugt mindestens ein Temperatursensor eingebaut, der über eine in der elektronischen Steuerung integrierte Regelung auf den Stellantrieb des Mischers wirkt.

Bevorzugt ist bei der erfindungsgemässen Funktionseinheit im Verbindungskanal zwischen dem Mischer und dem Verteiler ein Durchflusssensor eingebaut.

Der Verteiler der erfindungsgemässen Funktionseinheit weist bevorzugt ein, zwei oder drei Auslässe für Mischwasser auf, welche über eine mit der elektronischen Steuerung verbundene Bedieneinheit auswählbar sind.

Mit Vorteil sind bei der erfindungsgemässen Funktionseinheit der Mischer und der Verteiler mit dem Verbindungskanal bevorzugt so angeordnet, dass die Zuflüsse zum Mischer und die Auslässe des Verteilers auf derselben Seite liegen, so dass die Funktionseinheit auf einem Armaturenanschlussstück mit entsprechenden Öffnungen montierbar ist. Bevorzugt ist eine so gestaltete Funktionseinheit mit ihren Komponenten in einem kompakten Gehäuse untergebracht.

In einer besonderen Ausführungsform der erfindungsgemässen Funktionseinheit sind die Funktionseinheit und das Armaturenanschlussstück integral zusammen ausgebildet.

Die vorliegende Erfindung umfasst auch die Verwendung einer erfindungsgemässen Funktionseinheit für Sanitärinstallationen. Solche Sanitärinstallationen sind bevorzugt Unterputz-Sanitärinstallationen in Badezimmern für Duschen und/oder Badewannen.

Bei der Verwendung einer erfindungsgemässen Funktionseinheit umfassen die Sanitärinstallationen einen Kaltwasser- und einen Warmwasser-Anschluss an den betreffenden Anschlussstutzen eines Armaturenanschlussstücks, sowie bevorzugt ein, zwei oder drei Ausgänge an entsprechenden Anschlussstutzen für Mischwasser, welches von einer auf einem Basiskörper-Bereich mit Passflächen des Armaturenanschlussstücks montierten Funktionseinheit bereitgestellt wird. Eine erfindungsgemässe Funktionseinheit wird also vorzugsweise auf einem Armaturenanschlussstück mit entsprechenden Passflächen und Öffnungen für die Wasserdurchgänge montiert.

Ein Armaturenanschlussstück ist der Kern einer sogenannten Grundeinheit, welche üblicherweise Unterputz installiert wird. Eine Dusch- oder Wannenarmatur mit einer erfindungsgemässen Funktionseinheit wird somit bevorzugt auf ein in der Wand eingebautes Armaturenanschlussstück montiert. Ein Armaturenanschlussstück weist mindestens drei Anschlussstutzen für Wasserleitungen auf, nämlich für Kaltwasser und Warmwasser, sowie für mindestens einen Mischwasser-Ausgang.

Für die Installation in einem Badezimmer verfügt eine erfindungsgemässe Funktionseinheit oft über zwei Mischwasser-Ausgänge, wobei bei einer Dusche der Auslauf des Mischwassers über die Kopfbrause und/oder die Handbrause gewählt werden kann, oder bei einer Badewanne, wo mit der Wannenarmatur zwischen dem Badewannen-Einlauf und einer Brause gewählt werden kann.

Eine erfindungsgemässe Funktionseinheit kann vorzugsweise direkt oder gegebenenfalls mit einer dazwischen liegenden Adapterplatte an einem Armaturenanschlussstück montiert werden. Mittels einer Adapterplatte könnte eine eventuell nicht übereinstimmende Lochanordnung der Öffnungen zwischen den Passflächen des Armaturenanschlussstücks und der Funktionseinheit überbrückt werden.

Vorzugsweise weist das Armaturenanschlussstück, auf welchem eine erfindungsgemässe Funktionseinheit montiert oder mit dieser zusammen integral ausgebildet ist, bewegliche Anschlussstutzen auf.

Ein Armaturenanschlussstück mit beweglichen Anschlussstutzen ist näher beschrieben in der noch nicht veröffentlichten PCT-Anmeldung desselben Anmelders mit dem Aktenzeichen PCT/EP2019/051432, und diese wird hiermit auch zum Offenbarungsgehalt der vorliegenden Anmeldung erklärt.

Im Folgenden wird die Erfindung anhand von Figuren näher erläutert, die Beispiele darstellen, ohne den Umfang der vorliegenden Erfindung einzuschränken. Dabei zeigt:
- Fig. 1: eine erfindungsgemässe Funktionseinheit in einer schematischen Darstellung;
- Fig. 2: eine erfindungsgemässe Funktionseinheit in einer perspektivischen Ansicht;
- Fig. 3: eine erfindungsgemässe Funktionseinheit in einer Ansicht von unten;
- Fig. 4: eine erfindungsgemässe Funktionseinheit in einer anderen perspektivischen Ansicht;
- Fig. 5: eine erfindungsgemässe Funktionseinheit in einer Draufsicht;
- Fig. 6: eine erfindungsgemässe Funktionseinheit mit Blick auf einen Schnitt in der Ebene A-A (vgl. Fig. 5);
- Fig. 7: eine erfindungsgemässe Funktionseinheit in einem Querschnittsprofil durch die Schnittebene B-B (vgl. Fig. 6) ;
- Fig. 8: eine erfindungsgemässe Funktionseinheit mit Blick auf einen Schnitt in der Ebene C-C (vgl. Fig. 7).

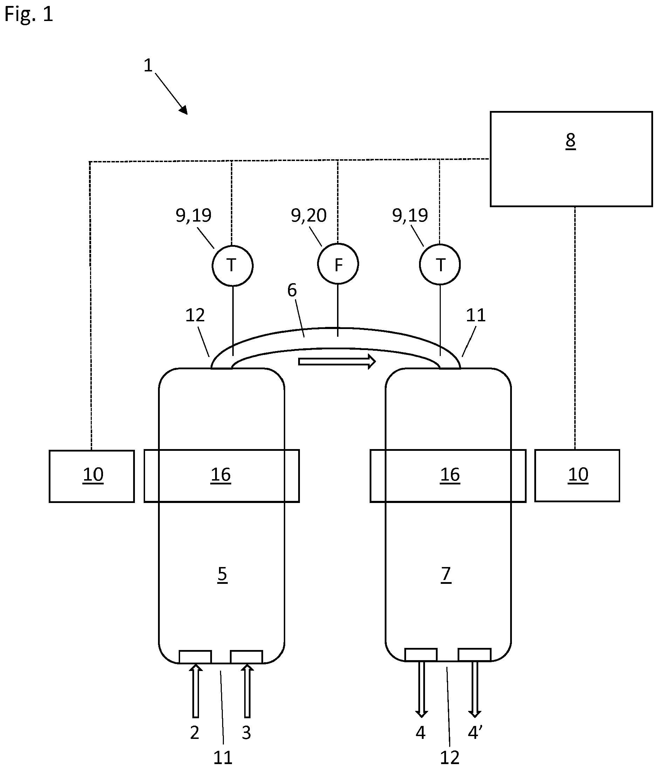

Die Figur 1 zeigt eine erfindungsgemässe Funktionseinheit 1 in einer schematischen Darstellung. Die Mischer-Kartusche 5 weist einen axialen Eintritt 11 mit Kaltwasser-Zufluss 2 und Warmwasser-Zufluss 3 auf. Der Austritt 12 der Mischer-Kartusche 5 ist hier axial gezeichnet, und verläuft dann in einem bogenförmigen Verbindungskanal 6 zum axialen Eintritt 11 in die Verteiler-Kartusche 7. Der Austritt 12 der Verteiler-Kartusche 7 ist axial und umfasst hier die beiden Mischwasser-Auslässe 4 und 4'. Durch diese bevorzugte bogenförmige Anordnung liegen die Zuflüsse 2,3 zum Mischer 5 und die Auslässe 4,4' des Verteilers 7 auf derselben Seite, welche hier als «unten» bezeichnet werden soll, unabhängig von der Lage der Funktionseinheit 1 bei einer späteren Montage in einer Sanitäreinrichtung. Eine solche, erfindungsgemäss bevorzugte Anordnung erlaubt eine kompakte Bauweise und eine einfache Montage auf einem Armaturenanschlussstück. Ersichtlich ist in Fig. 1 jeweils auch der schematisch eingezeichnete äussere Umfang 16 der im Inneren der Kartuschen befindlichen, axial drehbaren Hülse 15 (hier nicht sichtbar), wobei der äussere Umfang 16 jeweils mit einem elektromotorischen Stellantrieb 10 wirkverbunden ist. Die elektromotorischen Stellantriebe 10 sowie Sensoren 9, z.B. Temperatursensoren 19 (Symbol T) und optional ein Durchflusssensor 20 (Symbol F), sind an der elektronischen Steuerung 8 angeschlossen. Mit der elektronischen Steuerung 8 können über Schnittstellen Bedieneinheiten (hier nicht eingezeichnet) verbunden sein, über welche unter anderem Sollwerte für Mischwasser-Temperaturen eingegeben werden können, welche über eine in der elektronischen Steuerung 8 integrierte Regelung die Ventilstellung in der Mischer-Kartusche 5 entsprechend beeinflussen. Oder es wird mit einer Bedieneinheit der gewünschte Auslass 4 und/oder 4' des Verteilers 7 und gegebenenfalls zusätzlich eine gewünschte Durchflussmenge (abhängig vom eingestellten Öffnungsgrad der hier nicht sichtbaren Scheiben 13,14 mit ihren Durchlassöffnungen) gewählt, worauf der elektromotorische Stellantrieb 10 die entsprechende Ventilstellung in der Verteiler-Kartusche 7 bewirkt.

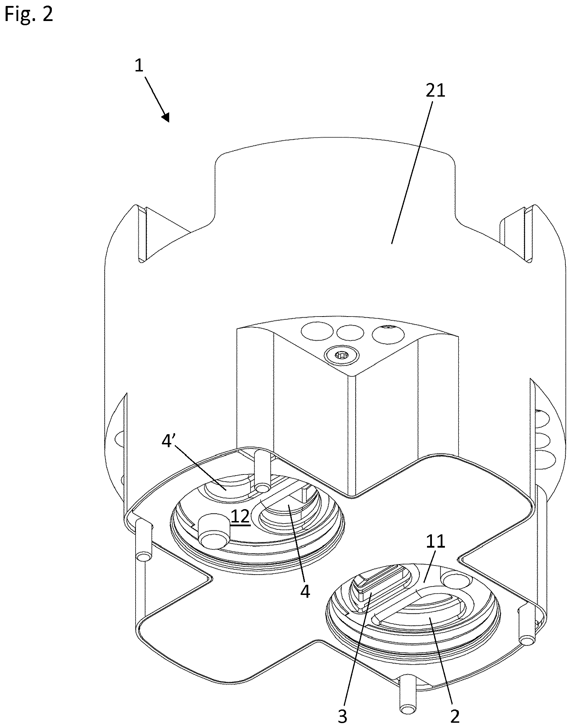

Die Figur 2 zeigt eine implementierte erfindungsgemässe Funktionseinheit 1 in einer bevorzugten kompakten Anordnung, d.h. mit den Zuflüssen 2,3 und den Auslässen 4,4' auf derselben Seite («unten»), in einer perspektivischen Ansicht von schräg unten. Die Komponenten dieser kompakt angeordneten Funktionseinheit 1 sind dabei in einem Gehäuse 21 untergebracht.

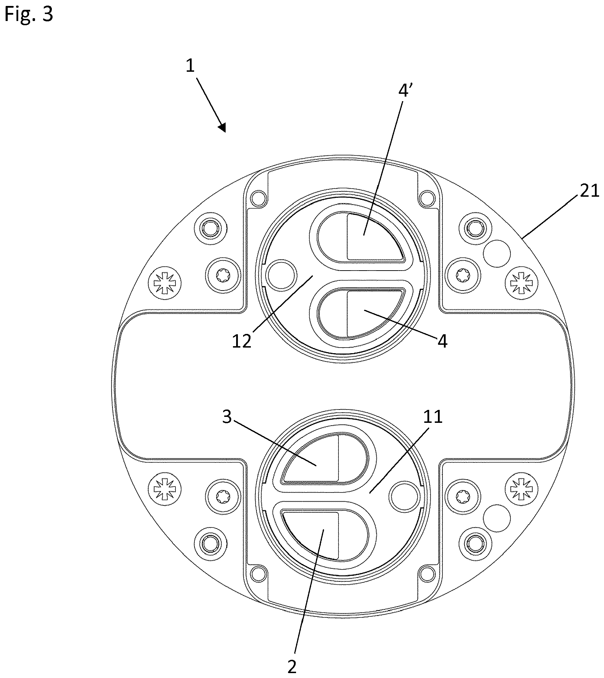

Die Figur 3 zeigt die erfindungsgemässe Funktionseinheit 1 aus Figur 2 in einer Ansicht genau von unten.

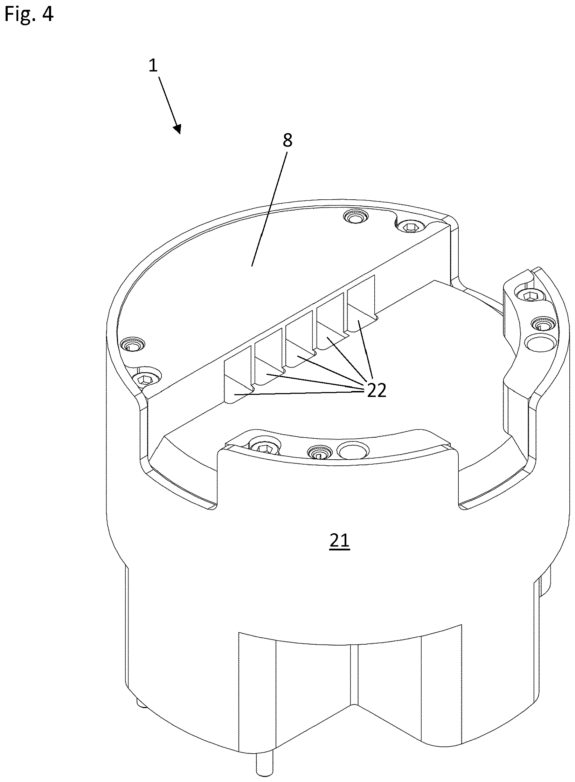

Figur 4 zeigt die erfindungsgemässe Funktionseinheit 1 aus Figur 2 in einer perspektivischen Ansicht von schräg oben. Im kompakten Gehäuse 21 ist unter dem Deckel auch die elektronische Steuerung 8 untergebracht. Auf der Oberseite des Gehäuses 21 beim Deckel sind überdies Steckplätze 22 für Schnittstellen ersichtlich.

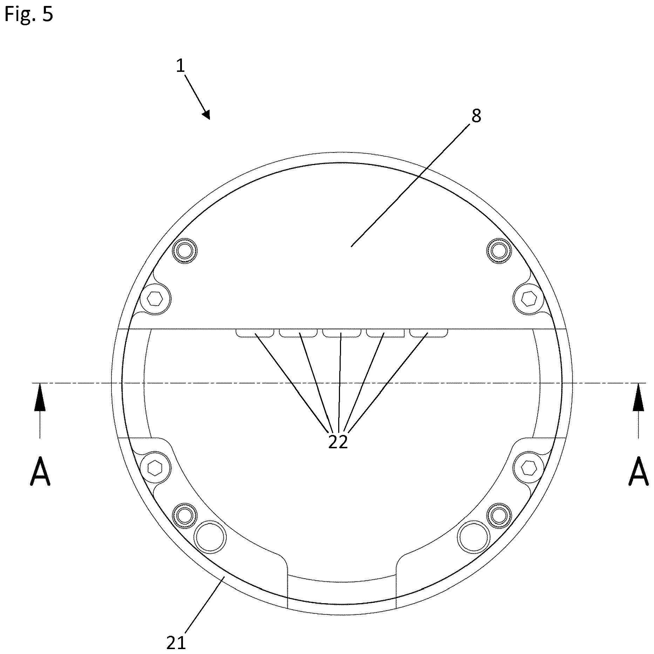

Figur 5 zeigt die erfindungsgemässe Funktionseinheit 1 aus Figur 4 in einer Draufsicht genau von oben.

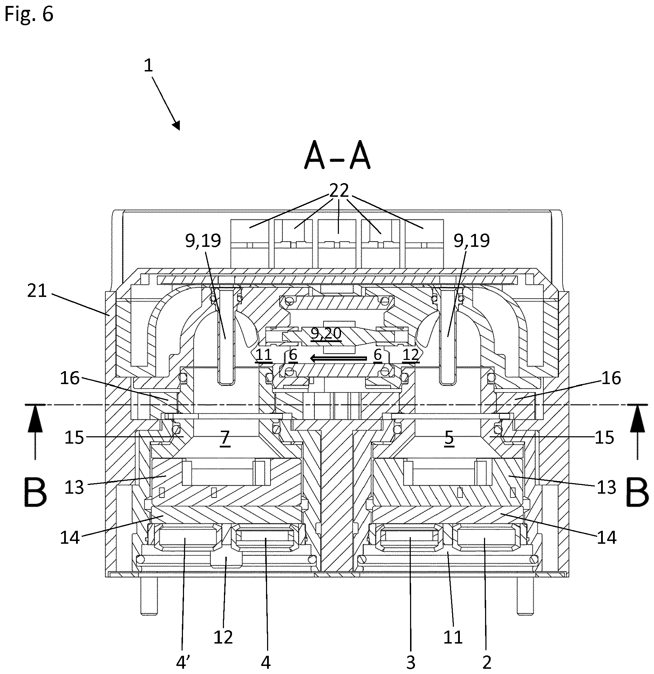

Die Figur 6 zeigt eine implementierte erfindungsgemässe Funktionseinheit 1 mit Blick auf einen Schnitt in der vertikalen Ebene A-A, die in Fig. 5 markiert ist. Dieser Schnitt zeigt realisierte Komponenten analog zur schematischen Darstellung von Fig. 1, wobei in Figur 6 aber die Mischer-Kartusche 5 rechts und die Verteiler-Kartusche 7 links ist. Folglich geht im Verbindungskanal 6 die Durchflussrichtung des Mischwassers von rechts nach links. Der Austritt 12 der Mischer-Kartusche 5 und der Eintritt 11 der Verteiler-Kartusche 7 sind hier radial ausgeführt. Dadurch ist der Verbindungskanal 6 geradlinig statt bogenförmig. Im Verbindungskanal 6 ist ein Turbinen-Durchflussmesser 9,20 angeordnet. Temperatursensoren 9,19 sind hier sowohl beim Austritt 12 der Mischer-Kartusche 5 als auch beim Eintritt 11 der Verteiler-Kartusche 7 eingebaut. Zu sehen sind in diesem Schnitt auch die axial drehbaren Hülsen 15 mit ihrem äusseren Umfang 16, die mit den Hülsen 15 im Eingriff stehenden drehbaren Scheiben 13, sowie die Statorscheiben 14.

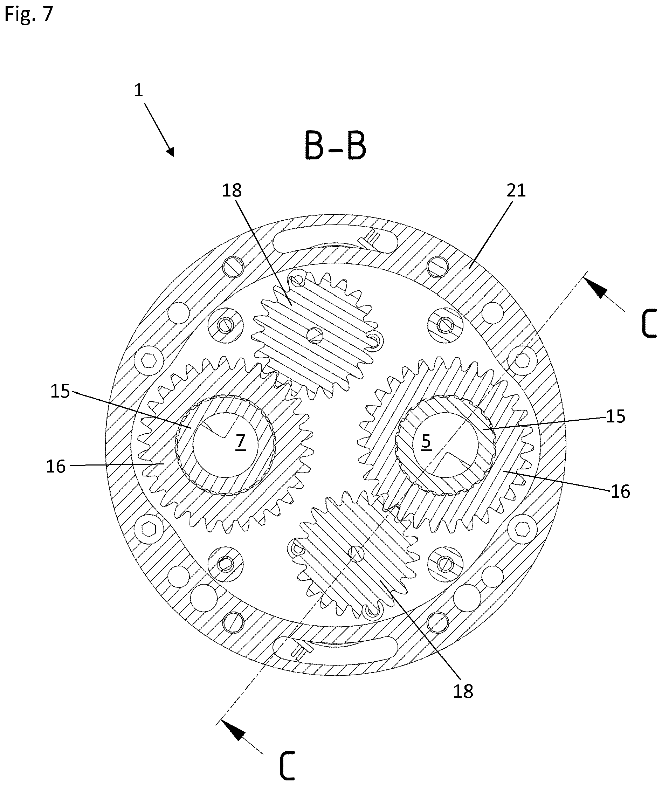

Figur 7 zeigt die implementierte erfindungsgemässe Funktionseinheit 1 von Fig. 6 in einem Querschnittsprofil durch die in Fig. 6 markierte Schnittebene B-B. Hier ist nun die bevorzugte Ausführungsform des Antriebs gut sichtbar, bei welchem der äussere Umfang 16 der axial drehbaren Hülsen 15 eine Verzahnung aufweist, in welche das als Zahnrad ausgebildete Antriebsrad 18 des jeweiligen elektromotorischen Stellantriebs 10 eingreift.

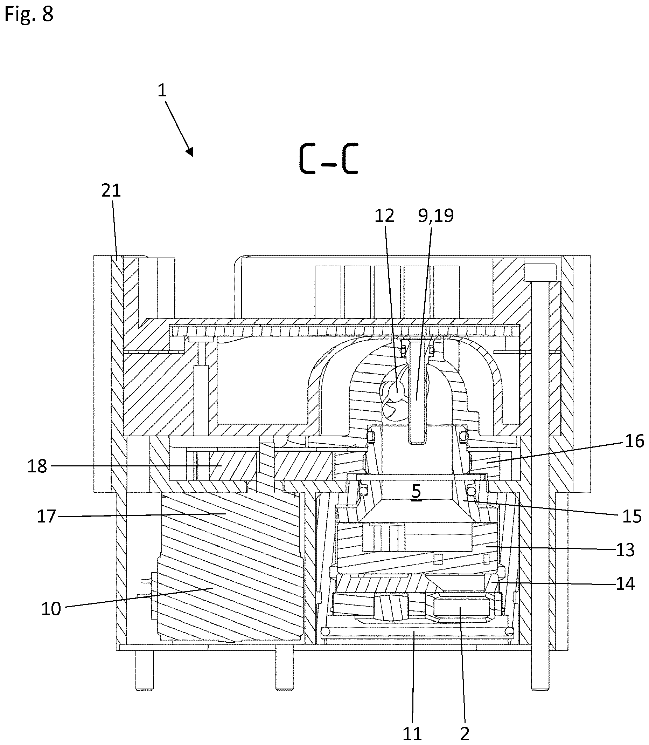

Die Figur 8 schliesslich zeigt die implementierte erfindungsgemässe Funktionseinheit 1 der vorangegangenen Figuren mit Blick auf einen Schnitt in der in Fig. 7 markierten Schnittebene C-C. Hier sieht man die Mischer-Kartusche 5 mit daneben angeordnetem elektromotorischen Stellantrieb 10. An den eigentlichen Motor schliesst sich ein Getriebe 17 an, dass über eine Welle das als Zahnrad ausgeführte Antriebsrad 18 antreibt. Letzteres steht im Eingriff mit dem eine Verzahnung aufweisenden äusseren Umfang 16 der axial drehbaren Hülse 15. Die ganze Anordnung und Konstruktion der Komponenten dieser erfindungsgemässen Funktionseinheit 1 ist wie ersichtlich sehr platzsparend und kompakt.

Wie der Beschreibung und den Erläuterungen zu den Figuren zu entnehmen ist, wird mit der vorliegenden Erfindung eine vorteilhafte und kompakte alternative Lösung für eine Funktionseinheit zur Verfügung gestellt. Diese ist auf einfache Weise auf einem Armaturenanschlussstück mit entsprechenden Öffnungen montierbar oder auch mit einem Armaturenanschlussstück zusammen integral ausführbar.

### Bezugszeichenliste

Gleiche Bezugszeichen in den Figuren deuten auf entsprechende Merkmale hin, auch wenn in der Beschreibung der einzelnen Figuren nicht in jedem Fall ausdrücklich darauf Bezug genommen wird.
- 1: Funktionseinheit
- 2: Kaltwasser-Zufluss
- 3: Warmwasser-Zufluss
- 4, 4': Mischwasser-Auslass
- 5: Mischer, Mischer-Kartusche
- 6: Verbindungskanal
- 7: Verteiler, Verteiler-Kartusche
- 8: elektronische Steuerung
- 9: Sensor
- 10: elektromotorischer Stellantrieb
- 11: Eintritt in Mischer- oder Verteiler-Kartusche
- 12: Austritt aus Mischer- oder Verteiler-Kartusche
- 13: drehbare Scheibe
- 14: Statorscheibe
- 15: axial drehbare Hülse
- 16: äusserer Umfang der axial drehbaren Hülse 15
- 17: Getriebe des elektromotorischen Stellantriebs 10
- 18: Antriebsrad
- 19: Temperatursensor
- 20: Durchflusssensor
- 21: Gehäuse
- 22: Steckplätze für Schnittstellen

## Patentansprüche

1. Funktionseinheit (1) für Sanitäreinrichtungen mit einem Kaltwasser-Zufluss (2) und einem Warmwasser-Zufluss (3) und mindestens einem Mischwasser-Auslass (4,4'), umfassend einen Mischer (5) und einen mit dem Mischer (5) über einen Verbindungskanal (6) verbundenen Verteiler (7) sowie eine elektronische Steuerung (8) und daran angeschlossene Sensoren (9) und elektromotorische Stellantriebe (10), wobei der Mischer (5) und der Verteiler (7) als Kartuschen mit elektromotorischen Stellantrieben (10) ausgebildet sind und die Kartuschen als axial durchströmbare Ventile mit axialen und/oder radialen Ein- und Austritten (11,12) konstruiert sind, welche im Inneren radial angeordnete und aufeinander liegende Scheiben (13,14) mit je mindestens einer Durchlassöffnung aufweisen, von denen jeweils eine Scheibe (13) auf einer Statorscheibe (14) drehbar ist, **dadurch gekennzeichnet, dass** die drehbare Scheibe (13) mit einer im jeweiligen Ventil axial angeordneten, in ihrem Hohlraum durchströmbaren und axial drehbaren Hülse (15) im Eingriff steht, und diese Hülse (15) an ihrem äusseren Umfang (16) mit dem jeweiligen elektromotorischen Stellantrieb (10) wirkverbunden ist.

2. Funktionseinheit (1) nach Anspruch 1, **dadurch gekennzeichnet, dass** bei beiden Kartuschen sowohl der Eintritt (11) als auch der Austritt (12) axial angeordnet sind.

3. Funktionseinheit (1) nach Anspruch 1, **dadurch gekennzeichnet, dass** bei der Mischer-Kartusche (5) der Eintritt (11) axial und der Austritt (12) radial, und bei der Verteiler-Kartusche (7) der Eintritt (11) radial und der Austritt (12) axial angeordnet sind.

4. Funktionseinheit (1) nach einem der vorhergehenden Ansprüche, **dadurch gekennzeichnet, dass** die axial drehbaren Hülsen (15) an ihrem äusseren Umfang (16) eine Verzahnung aufweisen.

5. Funktionseinheit (1) nach einem der vorhergehenden Ansprüche, **dadurch gekennzeichnet, dass** die elektromotorischen Stellantriebe (10) über ein Getriebe (17) und ein als Zahnrad ausgebildetes Antriebsrad (18) verfügen.

6. Funktionseinheit (1) nach Anspruch 5, **dadurch gekennzeichnet, dass** das als Zahnrad ausgebildete Antriebsrad (18) mittels eines Zahnriemens mit der Verzahnung am äusseren Umfang (16) der jeweiligen axial drehbaren Hülse (15) wirkverbunden ist.

7. Funktionseinheit (1) nach Anspruch 5, **dadurch gekennzeichnet, dass** das als Zahnrad ausgebildete Antriebsrad (18) in die Verzahnung am äusseren Umfang (16) der jeweiligen axial drehbaren Hülse (15) eingreift, und so die jeweilige Hülse (15) mit dem jeweiligen elektromotorischen Stellantrieb (10) wirkverbunden ist.

8. Funktionseinheit (1) nach einem der vorhergehenden Ansprüche, **dadurch gekennzeichnet, dass** die elektromotorischen Stellantriebe (10) Schrittmotoren oder Gleichstrommotoren sind.

9. Funktionseinheit (1) nach einem der vorhergehenden Ansprüche, **dadurch gekennzeichnet, dass** im Verbindungskanal (6) zwischen dem Mischer (5) und dem Verteiler (7), und/oder beim Austritt (12) des Mischers (5), und/oder beim Eintritt (11) des Verteilers (7), mindestens ein Temperatursensor (19) eingebaut ist, der über eine in der elektronischen Steuerung (8) integrierte Regelung auf den Stellantrieb (10) des Mischers (5) wirkt.

10. Funktionseinheit (1) nach einem der vorhergehenden Ansprüche, **dadurch gekennzeichnet, dass** im Verbindungskanal (6) zwischen dem Mischer (5) und dem Verteiler (7) ein Durchflusssensor (20) eingebaut ist.

11. Funktionseinheit (1) nach einem der vorhergehenden Ansprüche, **dadurch gekennzeichnet, dass** der Verteiler (7) ein, zwei oder drei Auslässe (4,4',4") für Mischwasser aufweist, welche über eine mit der elektronischen Steuerung (8) verbundene Bedieneinheit auswählbar sind.

12. Funktionseinheit (1) nach einem der vorhergehenden Ansprüche, **dadurch gekennzeichnet, dass** der Mischer (5) und der Verteiler (7) mit dem Verbindungskanal (6) so angeordnet sind, dass die Zuflüsse (2,3) zum Mischer (5) und die Auslässe (4,4') des Verteilers (7) auf derselben Seite liegen, so dass die Funktionseinheit (1) auf einem Armaturenanschlussstück mit entsprechenden Öffnungen montierbar ist.

13. Funktionseinheit (1) nach Anspruch 12, **dadurch gekennzeichnet, dass** die Funktionseinheit (1) mit ihren Komponenten in einem kompakten Gehäuse (21) untergebracht ist.

14. Funktionseinheit (1) nach Anspruch 12, **dadurch gekennzeichnet, dass** die Funktionseinheit (1) und das Armaturenanschlussstück integral zusammen ausgebildet sind.

15. Verwendung einer Funktionseinheit (1) nach einem der Ansprüche 1 bis 14 für Sanitärinstallationen.

16. Verwendung nach Anspruch 15 für Unterputz-Sanitärinstallationen in Badezimmern für Duschen und/oder Badewannen.

17. Verwendung nach Anspruch 15 oder 16, **dadurch gekennzeichnet, dass** die Sanitärinstallationen einen Kaltwasser- und einen Warmwasser-Anschluss an den betreffenden Anschlussstutzen eines Armaturenanschlussstücks umfassen, sowie ein, zwei oder drei Ausgänge an entsprechenden Anschlussstutzen für Mischwasser, welches von einer auf einem Basiskörper-Bereich mit Passflächen des Armaturenanschlussstücks montierten Funktionseinheit (1) bereitgestellt wird.

## Claims

1. Functional unit (1) for sanitary installations having a cold-water inflow (2) and a hot-water inflow (3) and at least one mixed-water outlet (4,4'), comprising a mixer (5) and a distributor (7) connected to the mixer (5) via a connecting channel (6), as well as an electronic control (8) and sensors (9) and electromotive actuators (10) connected to the electronic control, wherein the mixer (5) and the distributor (7) are designed as cartridges having electromotive actuators (10) and the cartridges are designed as valves, which can be flowed through axially, having axial and/or radial inlets and outlets (11,12), which valves have disks (13, 14) that are arranged in the interior radially and on top of one another and each have at least one passage opening, of which in each case one disk (13) is rotatable on a stator disk (14), **characterized in that** the rotatable disk (13) is in engagement with an axially rotatable sleeve (15) which is axially arranged in the respective valve and the cavity of which can be flowed through, and said sleeve (15) is operatively connected at its outer circumference (16) to the respective electromotive actuator (10).

2. Functional unit (1) according to claim 1, **characterized in that** both the inlet (11) and the outlet (12) are arranged axially in both cartridges.

3. Functional unit (1) according to claim 1, **characterized in that** the inlet (11) is arranged axially and the outlet (12) radially in the mixer cartridge (5), and the inlet (11) is arranged radially and the outlet (12) axially in the distributor cartridge (7).

4. Functional unit (1) according to one of the preceding claims, **characterized in that** the axially rotatable sleeves (15) comprise a toothing on their outer circumference (16).

5. Functional unit (1) according to one of the preceding claims, **characterized in that** the electromotive actuators (10) comprise a gear unit (17) and a drive wheel (18) designed as a gearwheel.

6. Functional unit (1) according to claim 5, **characterized in that** the drive wheel (18) designed as a gearwheel is operatively connected by means of a toothed belt to the toothing on the outer circumference (16) of the respective axially rotatable sleeve (15).

7. Functional unit (1) according to claim 5, **characterized in that** the drive wheel (18) designed as a gearwheel engages in the toothing on the outer circumference (16) of the respective axially rotatable sleeve (15), and thus the respective sleeve (15) is operatively connected to the respective electromotive actuator (10).

8. Functional unit (1) according to one of the preceding claims, **characterized in that** the electromotive actuators (10) are stepper motors or DC motors.

9. Functional unit (1) according to one of the preceding claims, **characterized in that** at least one temperature sensor (19) is installed in the connecting channel (6) between the mixer (5) and the distributor (7), and/or at the outlet (12) of the mixer (5), and/or at the inlet (11) of the distributor (7), which temperature sensor (19) acts on the actuator (10) of the mixer (5) via a closed-loop control integrated in the electronic control (8).

10. Functional unit (1) according to one of the preceding claims, **characterized in that** a flow sensor (20) is installed in the connecting channel (6) between the mixer (5) and the distributor (7).

11. Functional unit (1) according to one of the preceding claims, **characterized in that** the distributor (7) has one, two or three outlets (4,4',4'') for mixed water, which are selectable via an operating unit connected to the electronic control (8).

12. Functional unit (1) according to one of the preceding claims, **characterized in that** the mixer (5) and the distributor (7) with the connecting channel (6) are arranged in such a way that the inflows (2, 3) to the mixer (5) and the outlets (4,4') of the distributor (7) are on the same side, so that the functional unit (1) can be mounted on a fitting connector with corresponding openings.

13. Functional unit (1) according to claim 12, **characterized in that** the functional unit (1) is accommodated with its components in a compact housing (21).

14. Functional unit (1) according to claim 12, **characterized in that** the functional unit (1) and the fitting connector are integrally formed together.

15. Use of a functional unit (1) according to one of claims 1 to 14 for sanitary installations.

16. Use according to claim 15 for concealed sanitary installations in bathrooms for showers and/or bathtubs.

17. Use according to claim 15 or 16, **characterized in that** the sanitary installations comprise a cold-water connection and a hot-water connection to the respective connection pieces of a fitting connector, and one, two or three outlets to respective connection pieces for mixed water provided by a functional unit (1) mounted on a base body region with mating surfaces of the fitting connector.

## Revendications

1. Unité fonctionnelle (1) pour installations sanitaires ayant une entrée d'eau froide (2) et une entrée d'eau chaude (3) et au moins une sortie d'eau mélangée (4,4'), comprenant un mélangeur (5) et un distributeur (7) relié au mélangeur (5) par un canal de connexion (6), ainsi qu'une commande électronique (8), des capteurs (9) et des actionneurs électromoteurs (10) reliés à la commande électronique, le mélangeur (5) et le distributeur (7) étant conçus comme des cartouches dotées d'actionneurs électromoteurs (10) et les cartouches étant conçues comme des vannes pouvant être traversées axialement, ayant des entrées et sorties axiales et/ou radiales (11,12), ces vannes ont des disques (13,14) qui sont disposés à l'intérieur radialement et l'un sur l'autre et qui ont chacun au moins une ouverture de passage, dont dans chaque cas un disque (13) est rotatif sur un disque statorique (14), **caractérisé en ce que** le disque rotatif (13) est en prise avec un manchon (15) rotatif axialement qui est disposé axialement dans la valve respective et dont la cavité peut être traversée, et ledit manchon (15) est relié de manière opérationnelle à sa circonférence extérieure (16) à l'actionneur électromoteur respectif (10).

2. Unité fonctionnelle (1) selon la revendication 1, **caractérisée en ce que** l'entrée (11) et la sortie (12) sont disposées axialement dans les deux cartouches.

3. Unité fonctionnelle (1) selon la revendication 1, **caractérisée en ce que** l'entrée (11) est disposée axialement et la sortie (12) radialement dans la cartouche du mélangeur (5), et l'entrée (11) est disposée radialement et la sortie (12) axialement dans la cartouche du distributeur (7).

4. Unité fonctionnelle (1) selon l'une des revendications précédentes, **caractérisée en ce que** les manchons (15) à rotation axiale comportent une denture sur leur circonférence extérieure (16).

5. Unité fonctionnelle (1) selon l'une des revendications précédentes, **caractérisée en ce que** les actionneurs électromoteurs (10) comprennent un réducteur (17) et une roue d'entraînement (18) conçue comme une roue dentée.

6. Unité fonctionnelle (1) selon la revendication 5, **caractérisée en ce que** la roue d'entraînement (18) conçue comme une roue dentée est reliée de manière opérationnelle au moyen d'une courroie crantée à la denture sur la circonférence extérieure (16) du manchon à rotation axiale (15) respectif.

7. Unité fonctionnelle (1) selon la revendication 5, **caractérisée en ce que** la roue d'entraînement (18) conçue comme une roue dentée s'engage dans la denture sur la circonférence extérieure (16) du manchon à rotation axiale (15) respectif, et ainsi le manchon (15) respectif est relié de manière opérationnelle à l'actionneur électromoteur (10) respectif.

8. Unité fonctionnelle (1) selon l'une des revendications précédentes, **caractérisée en ce que** les actionneurs électromoteurs (10) sont des moteurs pas à pas ou des moteurs à courant continu.

9. Unité fonctionnelle (1) selon l'une des revendications précédentes, **caractérisée en ce qu'**au moins un capteur de température (19) est installé dans le canal de connexion (6) entre le mélangeur (5) et le distributeur (7), et/ou à la sortie (12) du mélangeur (5), et/ou à l'entrée (11) du distributeur (7), lequel capteur de température (19) agit sur l'actionneur (10) du mélangeur (5) par l'intermédiaire d'une commande en boucle fermée intégrée dans la commande électronique (8).

10. Unité fonctionnelle (1) selon l'une des revendications précédentes, **caractérisée en ce qu'**un capteur de débit (20) est installé dans le canal de connexion (6) entre le mélangeur (5) et le distributeur (7).

11. Unité fonctionnelle (1) selon l'une des revendications précédentes, **caractérisée en ce que** le distributeur (7) possède une, deux ou trois sorties (4,4',4'') pour l'eau mélangée, sélectionnables par l'intermédiaire d'une unité de commande reliée à la commande électronique (8).

12. Unité fonctionnelle (1) selon l'une des revendications précédentes, **caractérisée en ce que** le mélangeur (5) et le distributeur (7) avec le canal de connexion (6) sont disposés de manière à ce que les entrées (2,3) du mélangeur (5) et les sorties (4,4') du distributeur (7) soient du même côté, de sorte que l'unité fonctionnelle (1) puisse être montée sur un raccord avec des ouvertures correspondantes.

13. Unité fonctionnelle (1) selon la revendication 12, **caractérisée en ce que** l'unité fonctionnelle (1) est logée avec ses composants dans un boîtier compact (21).

14. Unité fonctionnelle (1) selon la revendication 12, **caractérisée en ce que** l'unité fonctionnelle (1) et le connecteur sont formés d'un seul tenant.

15. Utilisation d'une unité fonctionnelle (1) selon l'une des revendications 1 à 14 pour des installations sanitaires.

16. Utilisation selon la revendication 15 pour les installations sanitaires encastrées dans les salles de bains pour les douches et/ou les baignoires.

17. Utilisation selon la revendication 15 ou 16, **caractérisée en ce que** les installations sanitaires comprennent une connexion d'eau froide et une connexion d'eau chaude aux pièces de connexion respectives d'un raccord, et une, deux ou trois sorties vers les pièces de connexion respectives pour l'eau mélangée fournie par une unité fonctionnelle (1) montée sur une zone du corps de base avec des surfaces d'accouplement du raccord.
